# EUROPEAN PATENT APPLICATION

(11) **EP 4 645 765 A1**
(43) Date of publication of application: **05.11.2025**
(21) Application number: 23911376.4
(22) Date of filing: 31.10.2023
(51) Int. Cl.: H04L 12/28

(54) **ANOMALY DETECTION METHOD, ANOMALY DETECTION DEVICE, AND PROGRAM**

(30) Priority: 27.12.2022 JP 2022210028
(71) Applicant: Panasonic Intellectual Property Management Co., Ltd., Kadoma-shi, Osaka 571-0057 (JP)
(72) Inventor: ODA, Tomohiro, Kadoma-shi, Osaka 571-0057 (JP); HAGA, Tomoyuki, Kadoma-shi, Osaka 571-0057 (JP); UJIIE, Yoshihiro, Kadoma-shi, Osaka 571-0057 (JP); HIRAISHI, Rikiya, Kadoma-shi, Osaka 571-0057 (JP); YAMAMOTO, Masaya, Kadoma-shi, Osaka 571-0057 (JP); TSUTSUI, Tomoaki, Kadoma-shi, Osaka 571-0057 (JP)
(74) Representative: Grünecker Patent- und Rechtsanwälte PartG mbB
(86) International application number: PCT/JP2023/039276
(87) International publication number: WO 2024/142592

(57) **Abstract**

An anomaly detection method includes: acquiring a learning model that is generated through machine learning and determines whether there is an anomaly in an appliance by receiving, as input, first environment information and first state information for each of a plurality of first time points, the first environment information including at least first person presence information that indicates presence or absence of a person in a residence at the first time point and first time point information that indicates the first time point, the first state information indicating a state of the appliance at the first time point (S111); receiving a notification that indicates that the state of the appliance provided in a residence has undergone a change and acquiring second environment information that includes at least second person presence information that indicates presence or absence of a person in the residence at a second time point at which the notification was received and second time point information that indicates the second time point (S112); and executing detection processing for detecting an appliance anomaly by inputting, into the learning model, second state information that indicates the state of the appliance after the change indicated by the notification and the second environment information acquired (S115).

## Description

### [Technical Field]

The present invention relates to an anomaly detection method, an anomaly detection device, and a program.

### [Background Art]

A home appliance remote monitoring service providing system is disclosed (see Patent Literature (PTL) 1) that provides security against leakage of information, unauthorized access, and the like by connecting home installed appliances in a residence to home centralized management control means such as a home server.

### [Citation List]

### [Patent Literature]

[PTL 1]
Japanese Unexamined Patent Application Publication No. 2009-141725

### [Summary of Invention]

### [Technical Problem]

However, the home appliance remote monitoring service providing system described above is problematic in that, in the appliance anomaly detection, the environment inside and outside the residence and the appliance state when the appliance is used are not taken into consideration.

To address this, the present invention provides an anomaly detection method and the like, with which it is possible to detect an anomaly according to the actual environment inside and outside the residence and the actual appliance state.

### [Solution to Problem]

An anomaly detection method according to one aspect of the present invention is an anomaly detection method executed by an anomaly detection device, the anomaly detection method including: acquiring a learning model that is generated through machine learning and determines whether there is an anomaly in an appliance by receiving, as input, first environment information and first state information for each of a plurality of first time points, the first environment information including at least first person presence information that indicates presence or absence of a person in a residence at the first time point and first time point information that indicates the first time point, the first state information indicating a state of the appliance at the first time point; receiving a notification that indicates that the state of the appliance provided in the residence has undergone a change and acquiring second environment information that includes at least second person presence information that indicates presence or absence of the person in the residence at a second time point at which the notification was received and second time point information that indicates the second time point; and executing detection processing for detecting an appliance anomaly by inputting, into the learning model, second state information that indicates the state of the appliance after the change indicated by the notification and the second environment information acquired.

General and specific aspects disclosed in the specification of the present application may be implemented using a system, a device, an integrated circuit, a computer program, or a computer-readable recording medium such as a CD-ROM, or any combination thereof.

### [Advantageous Effects of Invention]

With the anomaly detection method according to the present invention, it is possible to detect an anomaly in an appliance according to the actual environment inside and outside a residence and the actual appliance state of the appliance.

### [Brief Description of Drawings]

[FIG. 1]

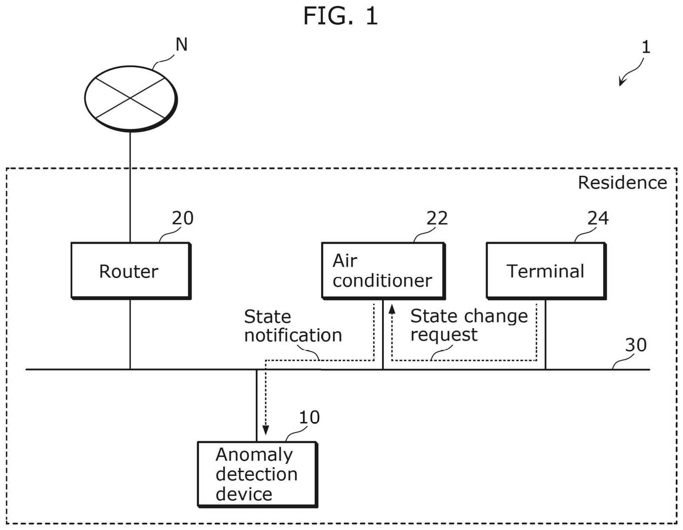

   FIG. 1 is a schematic diagram showing a system that includes an anomaly detection device according to Embodiment 1.
[FIG. 2]

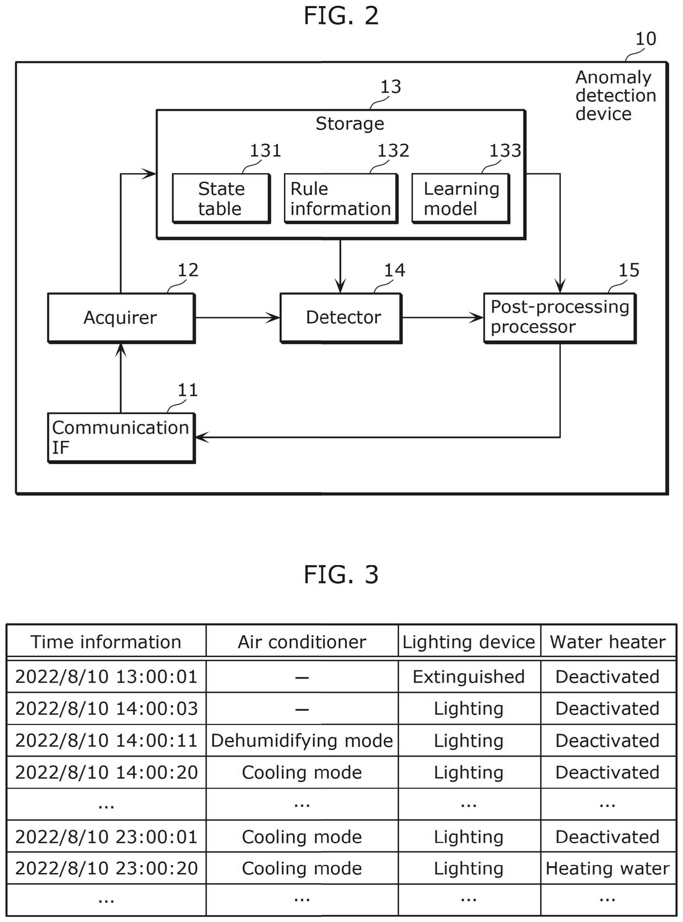

   FIG. 2 is a block diagram showing functions of the anomaly detection device according to Embodiment 1.
[FIG. 3]
   FIG. 3 is a diagram showing an example of a state table according to Embodiment 1.
[FIG. 4]

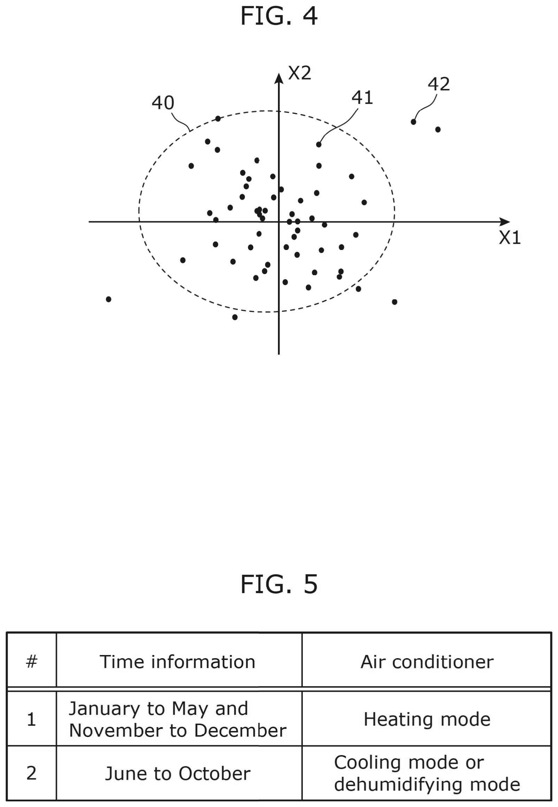

   FIG. 4 is a diagram showing a concept of clustering according to Embodiment 1.
[FIG. 5]
   FIG. 5 is a diagram showing an example of rule information according to Embodiment 1.
[FIG. 6]

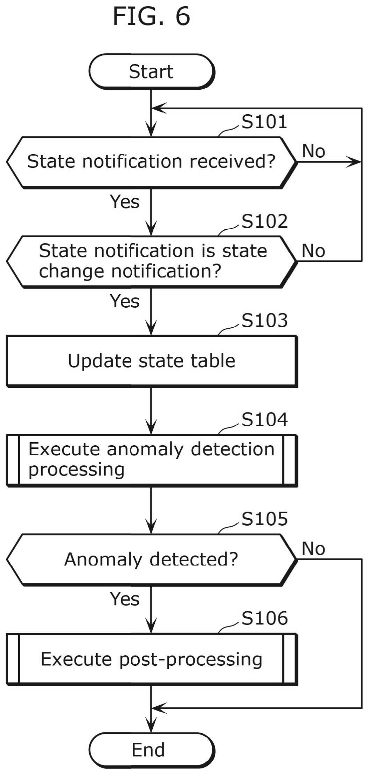

   FIG. 6 is a first flowchart illustrating processing performed by the anomaly detection device according to Embodiment 1.
[FIG. 7]

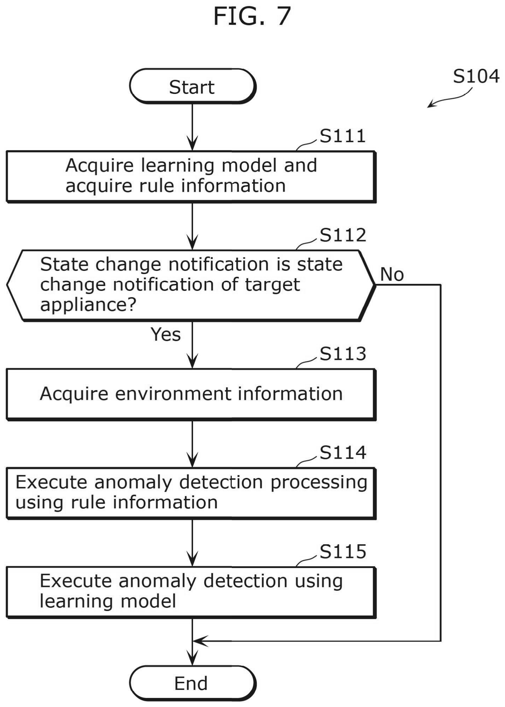

   FIG. 7 is a second flowchart illustrating the processing performed by the anomaly detection device according to Embodiment 1.
[FIG. 8]

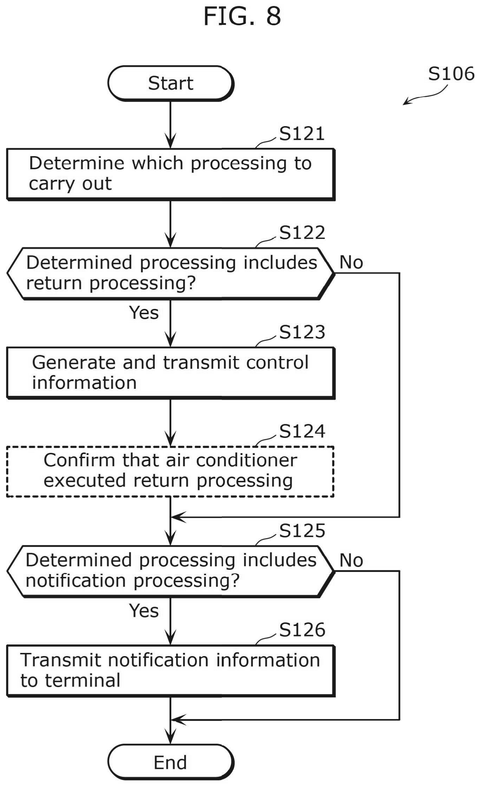

   FIG. 8 is a third flowchart illustrating the processing performed by the anomaly detection device according to Embodiment 1.
[FIG. 9]

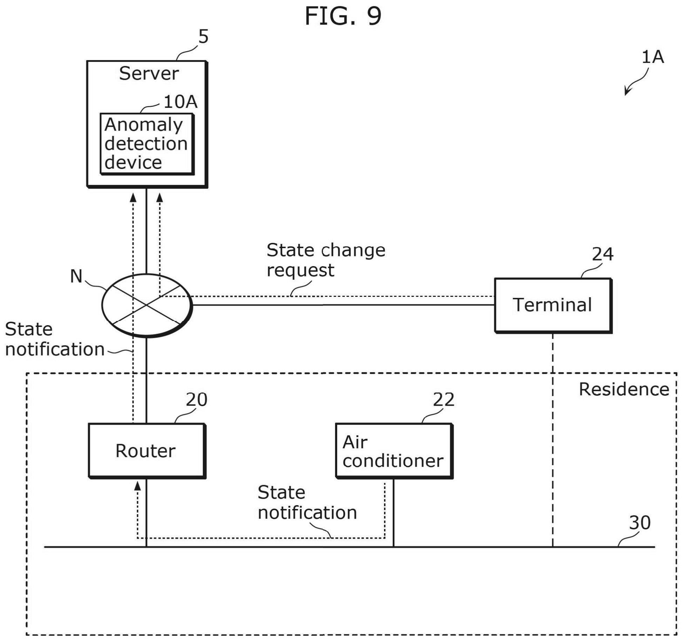

   FIG. 9 is a schematic diagram showing a system that includes an anomaly detection device according to Embodiment 2.
[FIG. 10]

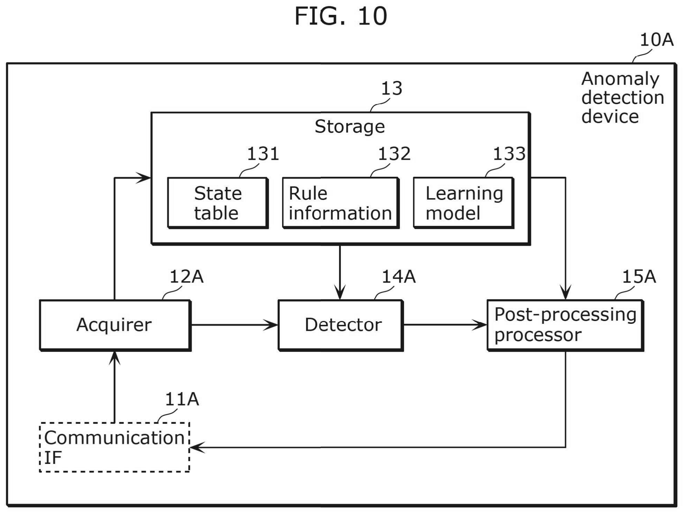

   FIG. 10 is a block diagram showing functions of the anomaly detection device according to Embodiment 2.
[FIG. 11]

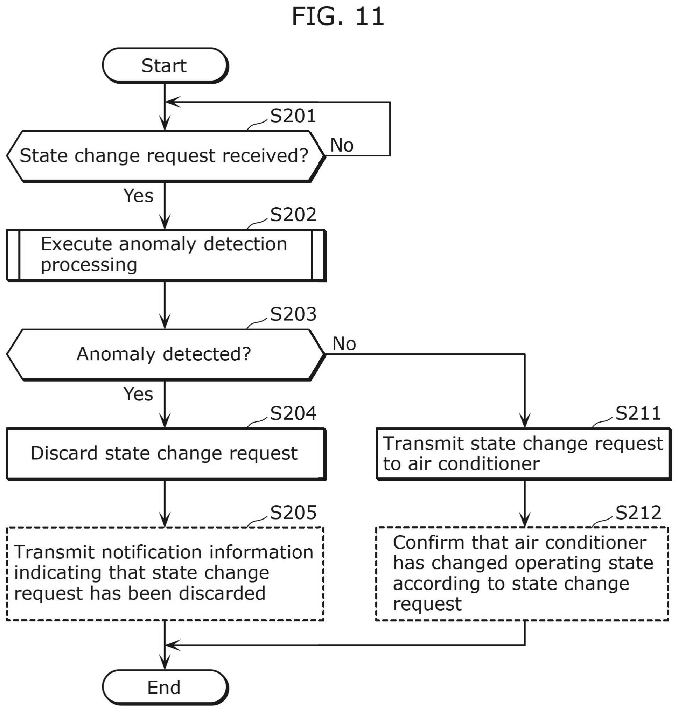

   FIG. 11 is a first flowchart illustrating processing performed by the anomaly detection device according to Embodiment 2.
[FIG. 12]

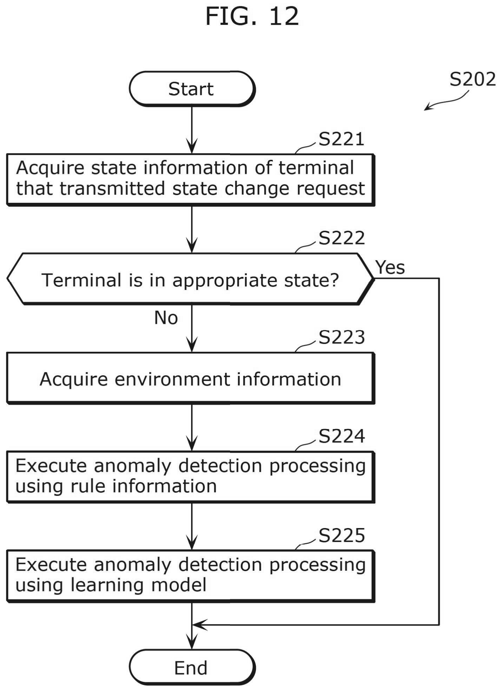

   FIG. 12 is a second flowchart illustrating the processing performed by the anomaly detection device according to Embodiment 2.

### [Description of Embodiments]

### (Underlying Knowledge Forming Basis of the Present Disclosure)

The inventors of the present application found that the following problem arises in the anomaly detection technique disclosed in the Background Art section.

In the home appliance remote monitoring service providing system disclosed in PTL 1, the home server is connected to a center management server using a virtual dedicated line provided on the Internet. The center management server remotely monitors and manages the home installed appliances via the home server using the virtual dedicated line, and thus leakage of information and unauthorized access can be suppressed. The remote monitoring and management of the home installed appliances includes, for example, anomaly detection in the home installed appliances.

In this connection, the operating state (also referred to simply as "state") of an appliance (a home installed appliance, a home electric appliance, or the like) used in a plurality of residences varies depending on the residence in which the appliance is used. This is because the appliance state of the appliance is adjusted according to the sensory tendency, the lifestyle, and the like of a resident of the residence.

For example, in the case of a resident of a residence who is sensitive to heat, it is often the case that an air conditioner provided in the residence is used in a cooling mode for a relatively long period of the year, and the temperature on the air conditioner is set to a low temperature. Also, for example, in the case of a resident of a residence who has a lifestyle (so-called night owl lifestyle) where he/she is more active during the hours from night to morning, it is often the case that an air conditioner, a lighting device, and the like provided in the residence are in operation during the hours from night to morning.

For this reason, in order to detect an anomaly in an appliance used in a residence, it is effective to determine whether there is an anomaly in the appliance by taking the sensory tendency and the lifestyle of the resident of the residence into consideration.

Accordingly, the present invention provides an anomaly detection method and the like, with which it is possible to detect an anomaly in an appliance according to the actual environment inside and outside the residence and the actual appliance state of the appliance.

Hereinafter, examples of invention obtained from the disclosure of the specification of the present application and advantageous effects and the like that can be obtained from the invention will be described.

(1) An anomaly detection method executed by an anomaly detection device, the anomaly detection method including: acquiring a learning model that is generated through machine learning and determines whether there is an anomaly in an appliance by receiving, as input, first environment information and first state information for each of a plurality of first time points, the first environment information including at least first person presence information that indicates presence or absence of a person in a residence at the first time point and first time point information that indicates the first time point, the first state information indicating a state of the appliance at the first time point; receiving a notification that indicates that the state of the appliance provided in the residence has undergone a change and acquiring second environment information that includes at least second person presence information that indicates presence or absence of the person in the residence at a second time point at which the notification was received and second time point information that indicates the second time point; and executing detection processing for detecting an appliance anomaly by inputting, into the learning model, second state information that indicates the state of the appliance after the change indicated by the notification and the second environment information acquired.

According to the aspect described above, the anomaly detection device can detect an anomaly in the appliance by determining whether there is an anomaly in the appliance using the learning model by receiving, as input, the environment information that includes at least the person presence information in the residence and the time information, and the appliance state information. The learning model is generated through machine learning using the actual environment information in the residence and the actual appliance state information. Accordingly, it may be possible to determine whether there is an anomaly in the appliance depending on whether the appliance state of the appliance is different from the actual normal usage state of the appliance in the residence. The actual normal usage state of the appliance in the residence varies according to the sensory tendency, the lifestyle, and the like of the resident of the residence. Accordingly, it is difficult to set the actual normal usage state of the appliance in advance before the appliance is actually used. In addition thereto, in general, the actual normal usage state of the appliance is different from the usage state of other appliances (for example, other home appliances). For this reason, by using the learning model generated through machine learning using the actual usage state of the appliance in the residence, it may be possible to determine whether there is an anomaly in the appliance by taking the appliance usage state specific to the residence (or the resident of the residence) into consideration. As described above, the anomaly detection device can detect an anomaly in the appliance according to the actual environment inside and outside the residence and the actual appliance state of the appliance.

(2) The anomaly detection method according to aspect (1), wherein, when the appliance anomaly is detected in the detection processing, control information for changing the state of the appliance to a normal state is generated and transmitted to the appliance.

According to the aspect described above, by transmitting the control information, the anomaly detection device can autonomously change the state of the appliance in which an anomaly has been detected. As described above, the anomaly detection device can change the state of the appliance to the normal state by detecting an anomaly in the appliance according to the actual environment inside and outside the residence and the actual appliance state of the appliance.

(3) The anomaly detection method according to aspect (2), further including: acquiring third state information that indicates the state of the appliance at a third time point that is prior to receiving the notification, wherein, in the generating of the control information, the control information is generated using the state of the appliance indicated by the third state information as the normal state.

According to the aspect described above, the anomaly detection device can easily change the state of the appliance to the normal state by changing the state of the appliance in which an anomaly has been detected to its original state before the change. As described above, the anomaly detection device can easily change the state of the appliance to the normal state by detecting an anomaly in the appliance according to the actual environment inside and outside the residence and the actual appliance state of the appliance.

(4) The anomaly detection method according to aspect (2),
wherein, in the generating of the control information, (1) when the first environment information at a specific time point matches fourth environment information at a fourth time point at which the notification was received, the specific time point being one of the plurality of first time points and at which a difference between the first environment information at the first time point and the fourth environment information is smallest, the control information is generated using the state of the appliance indicated by the first state information at the specific time point as the normal state, and, and (2) when the first environment information at the specific time point does not match the fourth environment information, a first difference and a second difference are calculated, the first difference being a difference between (i) representative state information representing the first state information at the plurality of first time points and representative environment information representing the first environment information at the plurality of first time points and (ii) the first state information and the first environment information at the specific time point, the second difference being a difference between (i) the representative state information and the representative environment information and (ii) fourth state information at the fourth time point and the fourth environment information, and (a) when the first difference is smaller than the second difference, the control information is generated using the state of the appliance indicated by the first state information at the specific time point as the normal state, and (b) when the first difference is larger than the second difference, the control information is generated using the state of the appliance indicated by the fourth state information as the normal state.

According to the aspect described above, the anomaly detection device can easily change the state of the appliance in which an anomaly has been detected to the normal state by transmitting either the control information when the first environment information at the specific time point matches the fourth environment information or the control information when the first environment information at the specific time point does not match the fourth environment information. Specifically, when the first environment information at the specific time point matches the fourth environment information, the anomaly detection device can easily change the state of the appliance to the normal state by changing the state of the appliance to the state of the appliance at the time of receiving the notification. When the first environment information at the specific time point does not match the fourth environment information, the anomaly detection device can easily change the state of the appliance to the normal state by changing the state of the appliance to a state relative to close to the state of the appliance at the time of receiving the notification. As described above, the anomaly detection device can easily change the state of the appliance to the normal state by detecting an anomaly in the appliance according to the actual environment inside and outside the residence and the actual appliance state of the appliance.

(5) The anomaly detection method according to any one of aspects (2) to (4), wherein the control information is information that causes the appliance to stand by for a standby period, and then changes the state of the appliance to the normal state.

According to the aspect described above, the anomaly detection device can, by transmitting the control information, provide the standby period during a time period until the state of the appliance in which an anomaly has been detected is changed to the normal state. If the state of the appliance is changed to the normal state immediately after the anomaly is detected, it may cause inconvenience to the user. Accordingly, it may be possible to avoid the inconvenience to the user in such a situation. For example, a case may be considered where, in a residence in which a lighting device is normally not turned during night hours on, the lighting device is turned on during night residence by a user's operation. In this case, the normal state of the lighting device during night hours is off, and thus the change that the lighting device is turned on during night hours can be determined as an anomaly. At this time, if the anomaly detection device turns off the lighting device immediately after detecting the anomaly, the surroundings of the user become dark, which may cause inconvenience to the user. In this case, according to the aspect described above, the anomaly detection device turns off the lighting device after a period of time that corresponds to the standby period passes after determining that the change is an anomaly, and thus it may be possible to avoid inconvenience to the user. Accordingly, the anomaly detection device can change the state of the appliance to the normal state while avoiding inconvenience to the user by detecting an anomaly in the appliance according to the actual environment inside and outside the residence and the actual appliance state of the appliance.

(6) The anomaly detection method according to any one of aspects (1) to (5), further including: acquiring rule information that indicates a normal state of the appliance at the second time point; and determining whether the second state information meets the rule information, and detecting the appliance anomaly when it is determined that the second state information does not meet the rule information.

According to the aspect described above, the anomaly detection device can detect an anomaly in the appliance by further determining whether the appliance is in the normal state using the rule information. The rule information can be set based on the ordinary usage state of the appliance, and thus, by using the rule information to detect an anomaly, the anomaly can be detected depending on whether the appliance is in a state different from the ordinary usage state. The anomaly detection device can more appropriately detect an anomaly in the appliance by performing anomaly detection based on the appliance usage state specific to the residence using the learning model, and anomaly detection based on the ordinary usage state of the appliance using the rule information. As described above, the anomaly detection device can more appropriately detect an anomaly in the appliance according to the actual environment inside and outside the residence and the actual appliance state of the appliance.

(7) The anomaly detection method according to any one of aspects (1) to (6), wherein the first environment information further includes, for each of the plurality of first time points, first temperature information that indicates a temperature in the residence at the first time point and first weather information that indicates weather in a location of the residence at the first time point, and the second environment information further includes second temperature information that indicates the temperature in the residence at the second time point and second weather information that indicates the weather in the location of the residence at the second time point.

According to the aspect described above, the anomaly detection device can more appropriately detect an anomaly in the appliance by further using the temperature in the residence and the weather in the location of the residence as the environment information.

(8) The anomaly detection method according to any one of aspects (1) to (7), wherein, when the appliance anomaly is detected, information that indicates the appliance anomaly is transmitted to a terminal belonging to a resident of the residence.

According to the aspect described above, when the anomaly detection device detects an anomaly in the appliance, the anomaly detection device can notify the resident of the residence of the detected anomaly in the appliance. Accordingly, by detecting an anomaly in the appliance according to the actual environment inside and outside the residence and the actual appliance state of the appliance, the anomaly detection device can notify the resident of the residence of the detected anomaly.

(9) The anomaly detection method according to any one of aspects (1) to (8), further including: acquiring fifth person presence information that indicates presence or absence of the person in the residence at a fifth time point at which a request to change the state of the appliance provided in the residence is received from a terminal and fifth time point information that indicates the fifth time point; and executing detection processing for detecting a terminal anomaly by inputting, into the learning model, fifth state information that indicates the state of the appliance after a change made in response to the request, and the fifth person presence information and the fifth time point information that were acquired.

According to the aspect described above, when the anomaly detection device receives a request to change the state of the appliance from the terminal, the anomaly detection device can detect an anomaly in the terminal by determining whether there is an anomaly in the appliance using the learning model by receiving, as input, the environment information and the appliance state information after the change made in response to the request. Accordingly, the anomaly detection device can detect an anomaly in the terminal according to the actual environment inside and outside the residence and the actual appliance state.

(10) An anomaly detection device including: a detector that acquires a learning model that is generated through machine learning and determines whether there is an anomaly in an appliance by receiving, as input,, for each of a plurality of first time points, (i) first environment information that includes at least first person presence information that indicates presence or absence of a person in a residence at the first time point and first time point information that indicates the first time point and (ii) first state information that indicates a state of the appliance at the first time point; and an acquirer that receives a notification that indicates that the state of the appliance provided in the residence has undergone a change and acquires second environment information that includes at least second person presence information that indicates presence or absence of the person in the residence at a second time point at which the notification was received and second time point information that indicates the second time point, wherein the detector further executes detection processing for detecting an appliance anomaly by inputting, into the learning model, second state information that indicates the state of the appliance after the change indicated by the notification and the second environment information acquired.

According to the aspect described above, advantageous effects that are the same as those of the anomaly detection method described above can be obtained.

(11) A program for causing a computer to execute the anomaly detection method according to aspect (1).

According to the aspect described above, advantageous effects that are the same as those of the anomaly detection method described above can be obtained.

General and specific aspects disclosed in the specification of the present application may be implemented using a system, a device, an integrated circuit, a computer program, or a computer-readable recording medium such as a CD-ROM, or any combination thereof.

Hereinafter, embodiments will be described specifically with reference to the drawings.

The embodiments described below show general or specific examples. The numerical values, shapes, materials, structural elements, the arrangement and connection of the structural elements, steps, the order of the steps, and the like shown in the following embodiments are merely examples, and therefore are not intended to limit the scope of the present invention. Also, among the structural elements described in the following embodiments, structural elements not recited in any one of the independent claims are described as arbitrary structural elements.

### (Embodiment 1)

In the present embodiment, an anomaly detection device and the like that detect an anomaly in an appliance according to the actual environment inside and outside a residence and the actual appliance state of the appliance will be described.

FIG. 1 is a schematic diagram showing system 1 that includes anomaly detection device 10 according to the present embodiment.

As shown in FIG. 1, system 1 includes anomaly detection device 10, router 20, air conditioner 22, and terminal 24. Anomaly detection device 10, router 20, air conditioner 22, and terminal 24 are provided within a residence and connected to be capable of performing communication with each other via network 30.

Network 30 is an in-residence network provided in the residence. There is no limitation on the communication standard of network 30. The communication standard of network 30 may be a wired local area network (LAN) communication standard (for example, Ethernet (registered trademark) or the like) or a wireless LAN communication standard (for example, Wi-Fi (registered trademark) or the like).

Anomaly detection device 10 is an information processing device that detects an anomaly in air conditioner 22. Anomaly detection device 10 may be implemented using a computer. Anomaly detection device 10 can receive state information that indicates the state of air conditioner 22 from air conditioner 22, and detect an anomaly in air conditioner 22 using the received state information. Details of an operation performed by anomaly detection device 10 will be specifically described later.

Router 20 is a communication device that connects network 30 to network N that is provided outside the residence. When router 20 receives, from network 30, a communication frame that is addressed to a device that is connected via network N, router 20 transfers the received communication frame to network N. When router 20 receives, from network N a communication frame that is addressed to a device that is connected to network 30, router 20 transfers the received communication frame to network 30. Instead of or in addition to router 20, a different communication device (for example, a bridge, a repeater, a media converter, or the like) may also be used.

Air conditioner 22 is an example of an appliance (a home installed appliance, a home electric appliance, or the like) provided in the residence. Another appliance provided in the residence, specifically, a lighting device, a water heater, an electric shutter, an electric lock, or the like may also be used as air conditioner 22. Hereinafter, in the case where another appliance is used as air conditioner 22, a supplementary explanation will be presented.

Air conditioner 22 is an appliance that adjusts the temperature and humidity of the residence. Air conditioner 22 has at least a cooling mode, a dehumidifying mode, and a heating mode as the operating state. Air conditioner 22 may also have a fan mode and the like as the operating state. When air conditioner 22 operates in the cooling mode, the dehumidifying mode, or the heating mode, the target temperature may be set. Air conditioner 22 operates to bring the temperature of the room where air conditioner 22 is provided to be closer to the target temperature. When the temperature of the room gets close enough to the target temperature, air conditioner 22 operates to maintain the temperature of the room at the target temperature.

When air conditioner 22 receives an operation from a user via an operation receiver (not shown) included in air conditioner 22, air conditioner 22 operates in accordance with the received operation. The operation receiver may be provided in the main body of air conditioner 22 or the remote controller of air conditioner 22. The user is, for example, a resident of the residence. However, the user is not limited thereto.

Also, when air conditioner 22 receives a request (also referred to as "state change request") to change the state of air conditioner 22 via network 30, air conditioner 22 changes the state of air conditioner 22 in accordance with the received state change request. The state change request is transmitted from, for example, terminal 24.

When air conditioner 22 changes the state of air conditioner 22, air conditioner 22 transmits, to anomaly detection device 10, information that indicates that the state of air conditioner 22 has been changed and a state notification that indicates the state of air conditioner 22 after the change. Also, air conditioner 22 can repeatedly transmit a state notification that indicates the current state of air conditioner 22 to anomaly detection device 10 irrespective of whether the state of air conditioner 22 has been changed. The state notification that indicates the current state of air conditioner 22 does not include the information that indicates that the state of air conditioner 22 has been changed. Air conditioner 22 can repeatedly transmit the state notification that indicates the current state of air conditioner 22 periodically (for example, every hour), and can also transmit the state notification that indicates the current state of air conditioner 22 in response to a request transmitted from anomaly detection device 10. The state notification transmitted by air conditioner 22 when the state of air conditioner 22 is changed will also be referred to as "state change notification". The state change notification is a state notification that includes information that indicates that the state of air conditioner 22 has been changed.

The state change request may include an authentic request and a fraudulent request.

The authentic request is a request to authentically change the state of air conditioner 22. The authentic request is a state change request transmitted in response to the user operating terminal 24 with the intention to change the state of air conditioner 22. For example, the authentic request may be a request to change the state of air conditioner 22 to the cooling mode, with the user's intention to lower the temperature of the room in the residence when the user is in the residence during a hot summer season.

The fraudulent request is a request to fraudulently change the state of air conditioner 22. The fraudulent request may be a request transmitted from malicious software (a so-called computer virus or the like) or the like installed on terminal 24. The fraudulent request from malicious software may be made for the purpose of, for example, causing damage (physical damage, financial damage, or the like) to the user, or discomfort or inconvenience to the user. For example, the fraudulent request may be a request to change the state of air conditioner 22 to the heating mode when nobody is in the residence during a hot summer season. The state of air conditioner 22 that has been changed based on the fraudulent request may be an anomalous state that needs to be detected by anomaly detection device 10.

Also, the fraudulent request may be made via the operation receiver of air conditioner 22. For example, a request to change the operating mode of air conditioner 22 accidentally made by a child touching the operation receiver of air conditioner 22 can be considered as the fraudulent request because it does not match the user's intention.

In the case where the appliance is a lighting device, for example, the authentic request may be a request to turn on the lighting device in the room where the user is present, made during the hours from daytime to evening. Also, for example, the fraudulent request may be a request to turn on the lighting device in the room where the user is not present, made in the late night hours.

Terminal 24 is an information processing terminal connected to network 30. Terminal 24 is, for example, a smartphone, a tablet terminal, a personal computer, or the like. Terminal 24 includes an operating system (OS) and software that runs on the OS, and operates based on the operation of the software. Terminal 24 can transmit the state change request to change the state of air conditioner 22 to air conditioner 22 via network 30. In particular, when malicious software is installed on terminal 24, under control of the malicious software, terminal 24 may transmit a state change request that includes the fraudulent request to air conditioner 22.

Hereinafter, a configuration of anomaly detection device 10 will be described.

FIG. 2 is a block diagram showing functions of anomaly detection device 10 according to the present embodiment.

As shown in FIG. 2, anomaly detection device 10 includes communication IF 11, acquirer 12, storage 13, detector 14, and post-processing processor 15. Acquirer 12, detector 14, and post-processing processor 15 are implemented by a processor (for example, a central processing unit (CPU)) (not shown) included in anomaly detection device 10 executing a program using a memory (not shown).

Communication IF 11 is a communication interface device that is connected to network 30 to be capable of performing communication with network 30. When communication IF 11 receives a communication frame that includes a state notification from air conditioner 22, communication IF 11 provides the state notification included in the communication frame to acquirer 12. Also, communication IF 11 transmits, to network 30, notification information that indicates an anomaly in air conditioner 22 provided from post-processing processor 15 by including the notification information in a communication frame that conforms to the communication standard of network 30.

Acquirer 12 acquires the state notification transmitted from air conditioner 22 and environment information of the residence.

When the acquired state notification is a state change notification, acquirer 12 stores the state of air conditioner 22 included in the state change notification in state table 131. Also, acquirer 12 acquires environment information (corresponding to second environment information) that includes at least person presence information (corresponding to second person presence information) that indicates presence or absence of a person in the residence at a time point (corresponding to a second time point) at which the state change notification was received from air conditioner 22 and time information (corresponding to second time point information) that indicates the second time point.

Acquirer 12 can acquire, as the person presence information, for example, a sensing result (for example, the presence or absence of a person or the number of persons present) of a motion sensor (not shown) provided in the residence. Also, when acquirer 12 acquires a broadcast frame transmitted from a terminal (a smartphone or a personal computer) that is connected to network 30 while communication IF 11 is monitoring communication frames received from network 30, acquirer 12 can acquire the person presence information by estimating that the owner of the terminal is in the residence. The broadcast frame may be, for example, a broadcast frame (for example, ARP Request, DHCP Discover, DHCP Request, or the like) used by a protocol such as Address Resolution Protocol (ARP), Dynamic Host Configuration Protocol (DHCP), Universal Plug & Play (UPnP), multicast Domain Name System (mDNS), or NetBIOS.

The second environment information may further include second temperature information that indicates the temperature in the residence at the second time point and second weather information that indicates the weather in the location of the residence at the second time point.

Acquirer 12 can acquire, as the temperature information, for example, a sensing result of a temperature sensor (not shown) provided in the residence. Also, acquirer 12 can acquire, as the weather information, for example, weather information that indicates the weather in the location of the residence from a weather information distribution server (not shown) via network N and network 30.

Storage 13 is a storage device that stores information. Storage 13 is a volatile or non-volatile storage device that uses a magnetic disk or a semiconductor memory. Specifically, storage 13 may be implemented using a random access memory (RAM), a hard disk drive (HDD), a solid state drive (SSD), or the like. State table 131, rule information 132, and learning model 133 are stored in storage 13.

State table 131 is information that includes the state information of air conditioner 22 at a plurality of time points in the past from the current time. State table 131 will be described later in detail.

Rule information 132 is rule information that indicates a normal state of air conditioner 22. Rule information 132 will be described later in detail.

Learning model 133 is a learning model generated through machine learning and determines whether there is an anomaly in air conditioner 22 by receiving, as input, for each of the plurality of time points in the past (corresponding to first time points), (i) environment information (corresponding to first environment information) that includes at least person presence information (corresponding to first person presence information) that indicates presence or absence of a person in the residence at the time point in the past and time information (corresponding to first time point information) that indicates the time point in the past and (ii) state information (corresponding to first state information) that indicates the state of the appliance at the time point in the past. The plurality of time points in the past may be, for example, hundreds to thousands of time points during a predetermined period (a period with a time length of one year or more). However, the plurality of time points in the past are not limited thereto.

The first environment information may further include, for each of the plurality of first time points, first temperature information that indicates the temperature in the residence at the first time point and first weather information that indicates the weather in the location of the residence at the first time point.

The machine learning is performed using, for example, a clustering technique. Specifically, in the machine learning, the first environment information (more specifically, the first person presence information, the first time point information, and the like included in the first environment information) and the first state information at the plurality of first time points are clustered to find a relationship between the first environment information and the first state information and thereby to divide the first environment information and the first state information while air conditioner 22 is in an anomalous state (or a normal state) into groups. As the clustering technique, for example, k-means method can be used. The k-means method is a method of classifying target information into a given number of clusters using the mean of a cluster.

Learning model 133 may be generated (or in other words, learning processing in the machine learning may be performed) by detector 14, or a different information processing device.

Detector 14 executes detection processing for detecting an air conditioner 22-related anomaly. Detector 14 performs the detection processing using at least learning model 133. Also, detector 14 may further perform the detection processing using rule information 132.

Detector 14 acquires learning model 133 14 by reading out learning model 133 from detector 14 in the detection processing using learning model 133.

Then, detector 14 executes the detection processing for detecting an air conditioner 22-related anomaly by inputting, into learning model 133, state information (corresponding to second state information) that indicates the state of air conditioner 22 after the change indicated by the state change notification acquired by acquirer 12 and the second environment information acquired by acquirer 12.

More specifically, detector 14 can determine that there is an anomaly in air conditioner 22 if it is determined that the second environment information (more specifically, the second person presence information, the second time point information, and the like included in the second environment information) and the second state information do not belong to one of groups into which the second environment information and the second state information are grouped through the clustering and that corresponds to the normal state. In the case where the second environment information and the second state information are grouped into a group that corresponds to the anomalous state through the clustering, detector 14 can determine that there is an anomaly in air conditioner 22 if it is determined that the second environment information and the second state information belong to one of groups into which the second environment information and the second state information are grouped through the clustering and that corresponds to the anomalous state.

In the detection processing using rule information 132, detector 14 acquires rule information 132. Rule information 132 is rule information that indicates the normal state of air conditioner 22 at the second time point. Then, detector 14 determines whether the second state information meets rule information 132. If it is determined that the second state information does not meet rule information 132, detector 14 determines that there is an anomaly in air conditioner 22

Rule information 132 may be rule information that indicates the anomalous state of air conditioner 22 at the second time point. In this case, detector 14 determines whether the second state information meets rule information 132, and determines that there is an anomaly in air conditioner 22 if it is determined that the second state information meets rule information 132.

Detector 14 performs the detection processing using learning model 133 and the detection processing using rule information 132. When detector 14 detects an anomaly in at least one of the detection processing using learning model 133 or the detection processing using rule information 132, detector 14 can determine that there is an anomaly in air conditioner 22.

Post-processing processor 15 executes processing according to the result of detection performed by detector 14. As the processing, post-processing processor 15 determines whether to execute return processing or notification processing. If it is determined to execute return processing, post-processing processor 15 executes the return processing according to the determination made. If it is determined to execute notification processing, post-processing processor 15 executes the notification processing according to the determination made.

The return processing is processing of, when detector 14 determines that there is an anomaly in air conditioner 22, causing the state of air conditioner 22 to change (or in other words, return) to the normal state. In the return processing, post-processing processor 15 generates control information for causing the state of air conditioner 22 to return to the normal state, and transmits the generated control information to air conditioner 22 via communication IF 11. In this case, at the time of transmitting the control information to air conditioner 22, post-processing processor 15 generates a communication frame that includes the control information, and transmits the generated communication frame to air conditioner 22 via communication IF 11. The control information may be, for example, control information that causes the operating state of air conditioner 22 to change to the cooling mode when air conditioner 22 is operating in the heating mode in response to a request to change the operating state of air conditioner 22 to the heating mode during a hot summer season. Air conditioner 22 that has received the communication frame may change the operating state of air conditioner 22 to the cooling mode according to the control information.

Alternatively, the control information may be control information that causes the operating state of air conditioner 22 to the normal state after causing air conditioner 22 to stand by for a standby period. In this case, at the time of transmitting the control information to air conditioner 22, post-processing processor 15 generates a communication frame that includes information that indicates the standby period and the control information, and transmits the generated communication frame to air conditioner 22 via communication IF 11. Air conditioner 22 that has received the communication frame may stand by for the standby period from the time point at which the communication frame was received, and thereafter, change the operating state of air conditioner 22 to the cooling mode according to the control information. The standby period may be, for example, about 5 minutes to 10 minutes, but is not limited thereto.

Also, the notification processing is processing of, when detector 14 determines that there is an anomaly in air conditioner 22, notifying the user of information that indicates the determined result. In the notification processing, post-processing processor 15 can transmit information that indicates the anomaly in air conditioner 22 to the terminal belonging to the user. In this case, post-processing processor 15 transmits the notification information that indicates the anomaly in air conditioner 22 to the terminal belonging to the user via communication IF 11. The terminal that has received the notification information may present the notification information to the user by displaying the notification information on a screen or outputting the notification information using sound/voice.

At the time of determining whether to execute the return processing, post-processing processor 15 can determine to not execute the return processing (or in other words, suppress execution of the return processing) when, for example, there is a possibility that executing the return processing may cause relatively large damage to the user. For example, in the case where the appliance is an electric shutter and the normal state of the electric shutter is the state in which the electric shutter is closed, when, in response to the state of the electric shutter being changed to an open state as the anomalous state, the electric shutter is closed due to the return processing, there is a possibility that the electric shutter may collide with a person or an object, causing damage to the person or the object.

Also, at the time of determining whether to execute the notification processing, post-processing processor 15 determines to execute the notification processing when, for example, the state of the appliance in which an anomaly is detected by detector 14 has a relatively large impact on the user. For example, when the operating state of air conditioner 22 is changed to the heating mode during a hot summer season or the set temperature in the heating mode is changed to 30°C as the anomalous state, a relatively large impact may be imposed on the user.

FIG. 3 is a diagram showing an example of state table 131 according to the present embodiment.

State table 131 shown in FIG. 3 is an example of state table 131 stored in storage 13.

State table 131 shown in FIG. 3 includes time information and information that indicates the state of air conditioner 22. Here, examples will be described in which the appliance is air conditioner 22, a lighting device, or a water heater.

For example, state table 131 shows that air conditioner 22 is in the dehumidifying mode at 14:00:11 on August 10, 2022 and is in the cooling mode after 14:00:20 on the same day. This corresponds to the case where the state change notification received from air conditioner 22 at 14:00:11 on August 10, 2022 indicates "dehumidifying mode" as the state of air conditioner 22 after change, and the state change notification received from air conditioner 22 at 14:00:20 on the same day indicates "cooling mode" as the state of air conditioner 22 after change. The state information of air conditioner 22 may further include information that indicates the target temperature.

The lighting device is in an extinguished state at 13:00:01 on August 10, 2022, and is in a lighting state after 14:00:03 on the same day. This corresponds to the case where the state change notification received from the lighting device at 14:00:03 on the same day indicates "lighting state" as the state of the lighting device after change. The state information of the lighting device may further include information that indicates brightness, color temperature, or the like.

The water heater is in a deactivated state before 23:00:01 on August 10, 2022, and is in a water-heating state at 23:00:20 on the same day. This corresponds to the case where the state change notification received from the water heater at 23:00:20 on the same day indicates "heating water" as the state of the water heater after change.

FIG. 4 is a diagram showing a concept of clustering according to the present embodiment.

In FIG. 4, a data space that has axis X1 and axis X2 is shown. Axis X1 and axis X2 correspond to the state information of air conditioner 22 and the environment information. In FIG. 4, for the sake of convenience of description, a two-dimensional data space that has two axes is shown, but in reality, a multidimensional data space that has more axes may be shown.

In FIG. 4, a plurality of points that correspond to a set of the state information and the environment information at a plurality of time points and are used to generate learning model 133 are plotted in the data space.

At the time of generating learning model 133, a group to which a majority (for example, about 90% or more) of the plurality of plotted points belong is generated. In FIG. 4, the border of the group is shown as boundary 40. A point (for example, point 41) that is located within boundary 40 corresponds to a point included in the group, and a point (for example, point 42) that is located outside boundary 40 corresponds a point that is not included in the group.

The group generated in the above-described manner is a group to which sets of normal state information and environment information belong and that corresponds to the normal state of air conditioner 22.

In general, the period during which air conditioner 22 operates normally is relatively long, and the period during which air conditioner 22 operates abnormally is relatively short. The reason is as follows. It is often the case that, when air conditioner 22 starts an anomalous operation, the user notices the anomalous operation and takes an action such as changing the settings of air conditioner 22 or stopping the operation of air conditioner 22 and causing air conditioner 22 to start the normal operation (for example, restoring air conditioner 22 to factory settings, making a repair, or the like), and thus air conditioner 22 returns to the normal operation. Also, in the case where the anomalous operation of air conditioner 22 is a serious one, air conditioner 22 cannot continue operating and thus stops operating. For this reason, as described above, the group to which a majority (for example, about 90% or more) of the plurality of points belong is used as the group that corresponds to the normal state of air conditioner 22.

At the time of detecting an anomaly in air conditioner 22 using learning model 133, detector 14 determines whether the acquired state information of air conditioner 22 and the acquired environment information belong to the group that corresponds to the normal state. If it is determined that they do not belong to the group, detector 14 determines that there is an anomaly in air conditioner 22.

A group other than the group that corresponds to the normal state of air conditioner 22 may also be generated as the group that corresponds to the anomalous state of air conditioner 22. In this case, at the time of detecting an anomaly in air conditioner 22 using learning model 133, detector 14 determines whether the acquired state information of air conditioner 22 and the acquired environment information belong to the group that corresponds to the anomalous state. If it is determined that they belong to the group that corresponds to the anomalous state, detector 14 determines that there is an anomaly in air conditioner 22.

FIG. 5 is a diagram showing an example of rule information 132 according to the present embodiment.

Rule information 132 shown in FIG. 5 shows rules for the normal state of air conditioner 22. Specifically, rule information 132 shown in FIG. 5 includes two rules.

Rule #1 is a rule regarding the period during which the heating mode is used, specifically, the rule stating that the normal state of air conditioner 22 during January to May and November to December is the heating mode.

Rule #2 is a rule regarding the period during which the cooling mode or the dehumidifying mode is used, specifically, the rule stating that the normal state of air conditioner 22 during June to October is the cooling mode or the dehumidifying mode.

At the time of detecting an anomaly in air conditioner 22 using rule information 132, detector 14 determines whether the acquired state of air conditioner 22 meets the rules. If it is determined that the acquired state of air conditioner 22 does not meet the rules, detector 14 determines that there is an anomaly in air conditioner 22.

FIG. 6 is a first flowchart illustrating processing performed by anomaly detection device 10 according to the present embodiment.

In step S101, acquirer 12 determines whether a state notification has been received. If it is determined that a state notification has been received (Yes in step S101), the processing proceeds to step S102. Otherwise (No in step S101), step S101 is performed again. That is, acquirer 12 remains standby in step S101 until a state notification is received.

In step S102, acquirer 12 determines whether the state notification received in step S101 is a state change notification. If it is determined that the state notification is a state change notification (Yes in step S102), the processing proceeds to step S103. Otherwise (No in step S102), step S101 is performed again.

In step S103, acquirer 12 updates state table 131 using the state notification, or in other words, the state change notification received in step S102.

In step S104, detector 14 executes detection processing for detecting an air conditioner 22-related anomaly using the state notification, or in other words, the state change notification received in step S101. Details of the processing of step S104 will be specifically described later.

In step S105, post-processing processor 15 determines whether detector 14 detected an anomaly in step S104. If it is determined that detector 14 detected an anomaly (Yes in step S105), the processing proceeds to step S106. Otherwise (No in step S105), the sequence of processing shown in FIG. 6 ends.

In step S106, post-processing processor 15 executes post-processing. Details of the processing of step S106 will be specifically described later.

FIG. 7 is a second flowchart illustrating the processing performed by anomaly detection device 10 according to the present embodiment. The flowchart shown in FIG. 7 illustrates detailed processing of step S104 shown in FIG. 6.

In step S111, detector 14 acquires learning model 133, and also acquires rule information 132.

In step S112, detector 14 determines whether the state notification, or in other words, the state change notification received in step S101 is a state change notification for an appliance that is an anomaly detection target (also referred to simply as "target appliance"). The target appliance may be set in advance by the resident or the like. If it is determined that the state notification is a state change notification of the target appliance (Yes in step S112), the processing proceeds to step S113. Otherwise (No in step S112), the sequence of processing shown in FIG. 7 ends.

In step S113, detector 14 acquires environment information. The environment information acquired at this time corresponds to environment information at the time point at which the state notification, or in other words, the state change notification was received in step S101.

In step S114, detector 14 executes anomaly detection processing using rule information 132 (see FIG. 5). For example, in the case where step S114 is performed in August, and the state change notification received in step S101 indicates "heating mode" as the state after change, detector 14 determines that the state of air conditioner 22 does not meet rule #1, and thus determines that there is an anomaly in air conditioner 22.

In step S115, detector 14 executes anomaly detection using learning model 133. Detector 14 detects an anomaly in air conditioner 22 by inputting, into learning model 133, the state information after change included in the state change notification received in step S101 and the environment information acquired in step S113. More specifically, detector 14 plots a point that corresponds to the state information after the change and the environment information in the data space shown in FIG. 4, and determines whether the point is located within boundary 40 (or in other words, belongs to the group that corresponds to the normal state) or outside boundary 40 (or in other words, does not belong to the group that corresponds to the normal state). If it is determined that the point is located outside boundary 40, detector 14 determines that there is an anomaly in air conditioner 22. In the case where the point is located on boundary 40, detector 14 may determine that the point is located within boundary 40, or the point is located outside boundary 40. After completing step S115, the sequence of processing shown in FIG. 7 ends.

FIG. 8 is a third flowchart illustrating the processing performed by anomaly detection device 10 according to the present embodiment. The flowchart shown in FIG. 8 illustrates detailed processing of step S106 shown in FIG. 6.

In step S121, post-processing processor 15 determines which processing to carry out as post-processing. Specifically, post-processing processor 15 determines whether to perform return processing of causing air conditioner 22 to return to the normal state. Also, post-processing processor 15 determines whether to perform notification processing of transmitting a notification to the terminal belonging to the user.

In step S122, post-processing processor 15 determines whether the processing determined in step S121 includes the return processing. If it is determined that the processing determined in step S121 includes the return processing (Yes in step S122), the processing proceeds to step S123. Otherwise (No in step S122), the processing proceeds to step S125.

In step S123, post-processing processor 15 generates control information used in the return processing, and transmits the generated control information to the terminal belonging to the user.

Post-processing processor 15 can generate, for example, control information that causes the state of air conditioner 22 to change (or in other words, return) to the original state before receiving the state change notification. In this case, post-processing processor 15 acquires state information (corresponding to third state information) that indicates the state of air conditioner 22 at a time point (corresponding to a third time point) that is prior to receiving the state change notification, and generates the control information using the state of air conditioner 22 indicated by the third state information as the normal state.

Also, post-processing processor 15 can generate, for example, control information that causes the state of air conditioner 22 to change to a state at a time point out of the plurality of first time points, the time point being a time point at which the environment information is relatively close to a state at a time point at which the notification was received. The time point at which the notification was received will also be referred to as "fourth time point", and the state information and the environment information at the fourth time point will also be referred to as "fourth state information" and "fourth environment information", respectively. In this case, post-processing processor 15 specifies, out of the plurality of first time points, a first time point that has the smallest difference between the first environment information at the first time point and the fourth environment information. The specified time point will also be referred to as "specific time point". If the first environment information at the specific time point matches the fourth environment information, post-processing processor 15 generates the control information using the state of air conditioner 22 indicated by the first state information at the specific time point as the normal state.

On the other hand, if the first environment information at the specific time point does not match the fourth environment information, post-processing processor 15 calculates a first difference and a second difference. The first difference is a difference between (i) representative state information representing the first state information at the plurality of first time points and representative environment information representing the first environment information at the plurality of first time points and (ii) the first state information and the first environment information at the specific time point. The second difference is a difference between (i) the representative state information and the representative environment information and (ii) the fourth state information and the fourth environment information. Then, (a) if the first difference is smaller than the second difference, post-processing processor 15 generates the control information using the state of air conditioner 22 indicated by the first state information at the specific time point as the normal state. Also, (b) if the first difference is larger than the second difference, post-processing processor 15 generates the control information using the state of air conditioner 22 indicated by the fourth state information as the normal state.

In step S124, post-processing processor 15 confirms that air conditioner 22 has executed the return processing as a result of the control information being transmitted in step S123. For example, post-processing processor 15 stands by until post-processing processor 15 receives, via communication IF 11, a state change notification that indicates that the state of air conditioner 22 has been changed as a result of the return processing being executed. If it is determined that post-processing processor 15 has received the state change notification, post-processing processor 15 confirms that air conditioner 22 has undergone the return processing. In this case, if post-processing processor 15 does not receive the state change notification even after a predetermined length of time passes, post-processing processor 15 may transmit the control information again. Also, post-processing processor 15 may transmit, to the terminal belonging to the user, notification information that indicates that it has been confirmed that air conditioner 22 has undergone the return processing or the control information has been transmitted again. Note that step S124 may be omitted.

In step S125, post-processing processor 15 determines whether the processing determined in step S121 includes the notification processing. If it is determined that the processing determined in step S121 includes the notification processing (Yes in step S125), the processing proceeds to step S126. Otherwise (No in step S125), the sequence of processing shown in FIG. 8 ends.

In step S126, post-processing processor 15 notifies the terminal belonging to the user of the processing determined in step S121 (or in other words, transmits notification information that indicates the processing determined in step S121 to the terminal belonging to the user). After completing step S126, the sequence of processing shown in FIG. 8 ends.

Through the processing described above, anomaly detection device 10 according to the present embodiment can detect an anomaly in the appliance according to the actual environment inside and outside the residence and the actual appliance state of the appliance.

### (Embodiment 2)

In the present embodiment, an anomaly detection device and the like with a configuration different from that of the embodiment described above that detect an anomaly in an appliance according to the actual environment inside and outside the residence and the actual appliance state of the appliance will be described. The anomaly detection device according to the present embodiment can detect an anomaly in a terminal that can change the state of an air conditioner.

FIG. 9 is a schematic diagram showing system 1A that includes anomaly detection device 10A according to the present embodiment.

As shown in FIG. 9, system 1A includes server 5, router 20, air conditioner 22, and terminal 24. Server 5, router 20, air conditioner 22, and terminal 24 are connected to be capable of performing communication with each other via network N and network 30. Anomaly detection device 10A is included in server 5 as one of the functions of server 5.

System 1A according to the present embodiment is different from system 1 according to Embodiment 1 primarily in that system 1A includes server 5, and terminal 24 is connected to server 5 via network N. The difference will be described below.

Server 5 is a server device that is a computer that manages the state of air conditioner 22. Server 5 is connected to air conditioner 22 to be capable of performing communication with air conditioner 22 via network N and network 30. When server 5 receives a request (also referred to as "state change request") to change the state of air conditioner 22 from terminal 24, server 5 transmits the received state change request to air conditioner 22 via network N and network 30 to change the state of air conditioner 22.

As described above, in system 1A, terminal 24 transmits the state change request to air conditioner 22 via server 5 to change the state of air conditioner 22.

Terminal 24 is connected to network N, and can perform communication with server 5 via network N. Also, terminal 24 may also be connected to network 30. In this case, terminal 24 can perform communication with server 5 via network 30 and network N. The network to which terminal 24 can temporarily connect is either one of network 30 or network N.

Anomaly detection device 10A can detect an anomaly in terminal 24 by acquiring the state change request transmitted by terminal 24 and received by server 5, and determining whether the state of air conditioner 22 after change in response to the state change request (also referred to simply as "the state after change" is anomalous.

FIG. 10 is a block diagram showing functions of anomaly detection device 10A according to the present embodiment.

As shown in FIG. 10, anomaly detection device 10A includes communication IF 11A, acquirer 12A, storage 13, detector 14A, and post-processing processor 15A. Acquirer 12A, detector 14A, and post-processing processor 15A are implemented by a processor (for example, a CPU) (not shown) included in anomaly detection device 10A executing a program using a memory (not shown). Storage 13 has the same configuration as that of storage 13 of Embodiment 1, and thus the description is omitted here.

Communication IF 11A is a communication interface device that is connected to network N to be capable of performing communication with network N. When communication IF 11A receives a communication frame that includes a state change request from terminal 24, communication IF 11A provides the state change request included in the communication frame to acquirer 12A. Also, communication IF 11A transmits, to network N, notification information that indicates an anomaly in air conditioner 22 provided from post-processing processor 15A by including the notification information in a communication frame that conforms to the communication standard of network N. Anomaly detection device 10A can use, as communication IF 11A, a communication IF that is included in server 5. In this case, it can also be said that anomaly detection device 10A uses a communication IF that is included in server 5 as communication IF 11A, without including communication IF 11A in anomaly detection device 10A.

Acquirer 12A acquires the state change request transmitted from terminal 24 and environment information of the residence. Acquirer 12A acquires, as the environment information, person presence information (corresponding to fifth person presence information) that indicates presence or absence of a person in the residence at a time point (a fifth time point) at which communication IF 11A received the state change request and time information (corresponding to fifth time point information) that indicates the fifth time point.

Acquirer 12A provides the acquired state change request and the acquired environment information to detector 14A.

Detector 14A executes detection processing of detecting an anomaly in terminal 24 by determining whether the state of air conditioner 22 after change in response to the state change request acquired from acquirer 12A is anomalous. It is considered that, when the state of air conditioner 22 after change in response to the state change request is anomalous, the cause is an anomaly in terminal 24. Accordingly, by detecting an anomaly in the state of air conditioner 22 after change in response to the state change request, an anomaly in terminal 24 can be detected.

As with detector 14 of Embodiment 1, detector 14A may perform at least detection processing using learning model 133, and may further perform detection processing using rule information 132. In the detection processing using learning model 133, detector 14A can detect an anomaly in terminal 24 by inputting, into learning model 133, state information (corresponding to fifth state information) that indicates the state of air conditioner 22 after change in response to the state change request acquired by acquirer 12A, and the environment information (fifth environment information) acquired by acquirer 12A. Details of the detection processing using learning model 133 and the detection processing using rule information 132 are the same as those executed by detector 14 of Embodiment 1, and thus the description is omitted here.

Post-processing processor 15A executes processing according to the result of detection performed by detector 14A. If an anomaly is detected by detector 14A, post-processing processor 15A discards the state change request. If an anomaly is not detected by detector 14A, post-processing processor 15A transmits a state change request to air conditioner 22.

FIG. 11 is a first flowchart illustrating processing performed by anomaly detection device 10A according to the present embodiment.

In step S201, acquirer 12A determines whether a state change request has been received. If it is determined that a state change request has been received (Yes in step S201), the processing proceeds to step S202. Otherwise (No in step S201), step S201 is performed again. That is, acquirer 12A remains standby in step S201 until a state change request is received.

In step S202, detector 14A executes detection processing for detecting a terminal 24-related anomaly using the state change request received in step S201. Details of the processing of step S202 will be specifically described later.

In step S203, post-processing processor 15A determines whether an anomaly has been detected by detector 14A in step S203. If it is determined that an anomaly has been detected by detector 14A (Yes in step S203), the processing proceeds to step S204. Otherwise (No in step S203), the processing proceeds to step S211.

In step S204, post-processing processor 15A discards the state change request received in step S201.

In step S205, post-processing processor 15A notifies the terminal belonging to the user of the fact that the state change request received in step S201 has been discarded (or in other words, transmits notification information that indicates that the state change request has been discarded to the terminal belonging to the user). Note that step S205 may be omitted.

After completing step S204 or S205, the sequence of processing shown in FIG. 11 ends.

In step S211, post-processing processor 15A transmits the state change request received in step S201 to air conditioner 22.

In step S212, post-processing processor 15A confirms that air conditioner 22 has changed the operating state as a result of the state change request being transmitted in step S211. For example, post-processing processor 15A stands by until post-processing processor 15A receives, via communication IF 11A, a state change notification that indicates that air conditioner 22 has changed the operating state. If it is determined that post-processing processor 15A has received the state change notification, post-processing processor 15A confirms that air conditioner 22 has changed the operating state according to the state change request. In this case, if post-processing processor 15A does not receive the state change notification even after a predetermined length of time passes, post-processing processor 15A may transmit the state change request again. Also, post-processing processor 15A may transmit, to the terminal belonging to the user, notification information that indicates that it has been confirmed that air conditioner 22 has changed the operating state according to the state change request or the state change request has been transmitted again. Note that step S212 may be omitted.

After completing step S211 or S212, the sequence of processing shown in FIG. 11 ends.

FIG. 12 is a second flowchart illustrating the processing performed by anomaly detection device 10A according to the present embodiment.

The flowchart shown in FIG. 12 illustrates detailed processing of step S202 shown in FIG. 11.

In step S221, detector 14A acquires terminal information regarding terminal 24 that transmitted the state change request received in step S201. The terminal information regarding terminal 24 may include, specifically, information regarding the account of software that runs on terminal 24 or information regarding the location of terminal 24.

In step S222, detector 14A determines, using the information acquired in step S221, whether terminal 24 is in an appropriate state. For example, detector 14A can determine that terminal 24 is in an appropriate state if the account of software that runs on terminal 24 matches the account of the resident of the residence. Also, detector 14A can determine that terminal 24 is in an appropriate state if the location of terminal 24 is the residence. Whether the location of terminal 24 is the residence can be determined by determining whether the IP address of terminal 24 matches the IP address of network 30 (for example, a static IP address that has the same subnet address as that of router 20 or an IP address assigned by router 20 based on DHCP). If it is determined by detector 14A that terminal 24 is in an appropriate state (Yes in step S222), the sequence of processing shown in FIG. 12 ends. Otherwise (No in step S222), the processing proceeds to step S223.

In step S223, detector 14A acquires environment information. The environment information acquired at this time corresponds to environment information at a time point at which the state change request was received in step S201.

In step S224, detector 14A executes anomaly detection processing using rule information 132 (see FIG. 5). The anomaly detection processing using rule information 132 is the same as that of step S113 of Embodiment 1 (see FIG. 7).

In step S225, detector 14A executes anomaly detection processing using learning model 133. The anomaly detection processing using learning model 133 is the same as that of step S114 of Embodiment 1 (see FIG. 7).

As described above, anomaly detection device 10A according to the present embodiment can detect an anomaly in terminal 24 that can change the appliance state according to the actual environment inside and outside the residence and the actual appliance state.

In the embodiments given above, the structural elements may be configured using dedicated hardware, or may be implemented by executing a software program suitable for the structural elements. Specifically, the structural elements may be implemented by being integrated into a home automation controller. The structural elements may be implemented by a program executor such as a CPU or a processor reading and executing a software program recorded in a recording medium such as a hard disk or a semiconductor memory. The software that implements the anomaly detection device and the like according to the embodiments given above is a program as described below.

Specifically, the program is a program for causing a computer to execute an anomaly detection method executed by an anomaly detection device, the anomaly detection method including: acquiring a learning model that is generated through machine learning and determines whether there is an anomaly in an appliance by receiving, as input, first environment information and first state information for each of a plurality of first time points, the first environment information including at least first person presence information that indicates presence or absence of a person in a residence at the first time point and first time point information that indicates the first time point, the first state information indicating a state of the appliance at the first time point; receiving a notification that indicates that the state of the appliance provided in the residence has undergone a change and acquiring second environment information that includes at least second person presence information that indicates presence or absence of the person in the residence at a second time point at which the notification was received and second time point information that indicates the second time point; and executing detection processing for detecting an appliance anomaly by inputting, into the learning model, second state information that indicates the state of the appliance after the change indicated by the notification and the second environment information acquired.

The anomaly detection device and the like according to one or more aspects of the present invention have been described based on the embodiments. However, the present invention is not limited to the embodiments given above. Other embodiments obtained by making various modifications that can be conceived by a person having ordinary skill in the art to the above embodiments as well as embodiments constructed by combining structural elements of different embodiments without departing from the scope of the present invention are also included within the scope of the one or more aspects of the present invention.

### [Industrial Applicability]

The present invention is applicable to a detection device that detects an anomaly in a home installed appliance, a home electric appliance, or the like.

### [Reference Signs List]

1, 1A system
5 server
10, 10A anomaly detection device
11, 11A communication IF
12, 12A acquirer
13 storage
14, 14A detector
15, 15A post-processing processor
20 router
22 air conditioner
24 terminal
30, N network
40 boundary
41, 42 point
131 state table
132 rule information
133 learning model

## Claims

1. An anomaly detection method executed by an anomaly detection device, the anomaly detection method comprising:
acquiring a learning model that is generated through machine learning and determines whether there is an anomaly in an appliance by receiving, as input, first environment information and first state information for each of a plurality of first time points, the first environment information including at least first person presence information that indicates presence or absence of a person in a residence at the first time point and first time point information that indicates the first time point, the first state information indicating a state of the appliance at the first time point;
receiving a notification that indicates that the state of the appliance provided in the residence has undergone a change and acquiring second environment information that includes at least second person presence information that indicates presence or absence of the person in the residence at a second time point at which the notification was received and second time point information that indicates the second time point; and
executing detection processing for detecting an appliance anomaly by inputting, into the learning model, second state information that indicates the state of the appliance after the change indicated by the notification and the second environment information acquired.

2. The anomaly detection method according to claim 1,
wherein, when the appliance anomaly is detected in the detection processing, control information for changing the state of the appliance to a normal state is generated and transmitted to the appliance.

3. The anomaly detection method according to claim 2, further comprising:
acquiring third state information that indicates the state of the appliance at a third time point that is prior to receiving the notification,
wherein, in the generating of the control information, the control information is generated using the state of the appliance indicated by the third state information as the normal state.

4. The anomaly detection method according to claim 2,
wherein, in the generating of the control information,
(1) when the first environment information at a specific time point matches fourth environment information at a fourth time point at which the notification was received, the specific time point being one of the plurality of first time points and at which a difference between the first environment information at the first time point and the fourth environment information is smallest, the control information is generated using the state of the appliance indicated by the first state information at the specific time point as the normal state, and
(2) when the first environment information at the specific time point does not match the fourth environment information,
a first difference and a second difference are calculated, the first difference being a difference between (i) representative state information representing the first state information at the plurality of first time points and representative environment information representing the first environment information at the plurality of first time points and (ii) the first state information and the first environment information at the specific time point, the second difference being a difference between (i) the representative state information and the representative environment information and (ii) fourth state information at the fourth time point and the fourth environment information, and
(a) when the first difference is smaller than the second difference, the control information is generated using the state of the appliance indicated by the first state information at the specific time point as the normal state, and
(b) when the first difference is larger than the second difference, the control information is generated using the state of the appliance indicated by the fourth state information as the normal state.

5. The anomaly detection method according to any one of claims 2 to 4,
wherein the control information is information that causes the appliance to stand by for a standby period, and then changes the state of the appliance to the normal state.

6. The anomaly detection method according to claim 1, further comprising:
acquiring rule information that indicates a normal state of the appliance at the second time point; and
determining whether the second state information meets the rule information, and detecting the appliance anomaly when it is determined that the second state information does not meet the rule information.

7. The anomaly detection method according to claim 1,
wherein the first environment information further includes, for each of the plurality of first time points, first temperature information that indicates a temperature in the residence at the first time point and first weather information that indicates weather in a location of the residence at the first time point, and
the second environment information further includes second temperature information that indicates the temperature in the residence at the second time point and second weather information that indicates the weather in the location of the residence at the second time point.

8. The anomaly detection method according to claim 1,
wherein, when the appliance anomaly is detected, information that indicates the appliance anomaly is transmitted to a terminal belonging to a resident of the residence.

9. The anomaly detection method according to claim 1, further comprising:
acquiring fifth person presence information that indicates presence or absence of the person in the residence at a fifth time point at which a request to change the state of the appliance provided in the residence is received from a terminal and fifth time point information that indicates the fifth time point; and
executing detection processing for detecting a terminal anomaly by inputting, into the learning model, fifth state information that indicates the state of the appliance after a change made in response to the request, and the fifth person presence information and the fifth time point information that were acquired.

10. An anomaly detection device comprising:
a detector that acquires a learning model that is generated through machine learning and determines whether there is an anomaly in an appliance by receiving, as input, for each of a plurality of first time points, (i) first environment information that includes at least first person presence information that indicates presence or absence of a person in a residence at the first time point and first time point information that indicates the first time point and (ii) first state information that indicates a state of the appliance at the first time point; and
an acquirer that receives a notification that indicates that the state of the appliance provided in the residence has undergone a change and acquires second environment information that includes at least second person presence information that indicates presence or absence of the person in the residence at a second time point at which the notification was received and second time point information that indicates the second time point,
wherein the detector further executes detection processing for detecting an appliance anomaly by inputting, into the learning model, second state information that indicates the state of the appliance after the change indicated by the notification and the second environment information acquired.

11. A program for causing a computer to execute the anomaly detection method according to claim 1.
